Europäisches Patentamt

European Patent Office

Office européen des brevets

(11) Veröffentlichungsnummer: **0 301 251**
**A2**

## EUROPÄISCHE PATENTANMELDUNG

(21) Anmeldenummer: 88110262.8

(51) Int. Cl.⁴: **G01J 3/08**

(22) Anmeldetag: 28.06.88

(30) Priorität: 14.07.87 DE 3723177

(43) Veröffentlichungstag der Anmeldung:
01.02.89 Patentblatt 89/05

(84) Benannte Vertragsstaaten:
DE FR GB IT

(71) Anmelder: LEYBOLD AKTIENGESELLSCHAFT
Wilhelm-Rohn-Strasse 25
D-6450 Hanau 1(DE)

(72) Erfinder: Schneider, Rudolf
Katharina-Belgica-Strasse 19
D-6450 Hanau(DE)
Erfinder: Krause, Hans, Dr.
Elisabethenstrasse 14 b
D-6350 Bad Nauheim(DE)
Erfinder: Heimel, Helmut
Marienstrasse 4
D-6451 Ronneburg(DE)

(74) Vertreter: Schickedanz, Willi, Dipl.-Ing.
Langener Strasse 68
D-6050 Offenbach/Main(DE)

(54) **Strahlungs-Zerhackereinrichtung.**

(57) Die Erfindung betrifft eine Strahlungs-Zerhackereinrichtung (85), die zwischen zwei aufeinanderliegenden Teilen angeordnet ist. Die Zerhackerscheibe (85) ist hierbei über eine Achse (87) mit einer Lagervorrichtung (89) gekoppelt, die drei Auflagepunkte (93, 94, 104) aufweist. Durch diese besondere Lagerung wird das Zerhackerrauschen minimiert.

FIG. 10

## STRAHLUNGS-ZERHACKEREINRICHTUNG

Die Erfindung betrifft eine Strahlungs-Zerhackereinrichtung mit einer Zerhackerscheibe.

Optische Zerhackerscheiben werden vorzugsweise bei Analysegeräten verwendet, mit denen das Absorptionsvermögen eines festen, flüssigen oder gasförmigen Stoffs festgestellt wird. Ihre Aufgabe besteht darin, einen oder mehrere Lichtstrahlen, die unmittelbar oder mittelbar auf einen lichtempfindlichen Sensor fallen, kurzzeitig zu unterbrechen. Die Unterbrechung und erneute Freigabe eine Lichtstrahls wird auch Lichtmodulation genannt. Diese Lichtmodulation geschieht in vielen Fällen zum Trennen des eigentlichen Meßsignals von Störsignalen. Bei mehrkanaligen Analysegeräten kann eine Zerhackerscheibe auch dazu verwendet werden, zu einem ersten Zeitpunkt das Licht in einem ersten Kanal und zu einem zweiten Zeitpunkt das Licht in einem zweiten Kanal zu unterbrechen oder freizugeben.

Es ist bereits eine Lichtunterbrechungsvorrichtung für photometrische Meßgeräte bekannt, die einen Motor aufweist, der eine die Lichtstrahlung unterbrechende Blende in Rotation versetzt, wobei der Motor einen zylindrischen Rotor besitzt und das Motorgehäuse in axialer Richtung durchbrochen ist, um die Lichtstrahlung in dieser Richtung durch das Gehäuse und den Rotor hindurchtreten zu lassen (DE-OS 24 02 865). Hierbei ist die Rotorwelle mit dem Rotor durch ein speicherartiges Element verbunden und auf der Rotorwelle außerhalb des Motorgehäuses die Blende befestigt. Nachteilig ist bei dieser bekannten Unterbrechungsvorrichtung, daß als Antriebsmotor ein Synchronmotor erforderlich ist.

Bei einer anderen Lichtzerhackereinrichtung ist die Zerhackerscheibe direkt mit einer Welle eines Antriebsmotors verbunden (US-PS 4 509 819, Fig. 26). Die Aufgabe der Zerhackerscheibe besteht hierbei jedoch darin, das auftreffende Licht zu reflektieren.

Es ist weiterhin eine Zerhackereinrichtung für eine Vorrichtung zur Messung des optischen Absorptionsverhaltens bekannt, die durch einen Ferrarismotor gebildet ist, der eine Zerhackerscheibe sowie zwei Elektromagnetsysteme umfaßt (DE-OS 26 08 669). Bei einer Ausbildungsform dieser bekannten Zerhackereinrichtung ist eine Scheibe von einer scheibenförmigen Vakuumkammer umgeben. In dieser Scheibe sind auf dem Umfang gleichförmig verteilt mehrere Öffnungen angeordnet, die in Verbindung mit den zwischen ihnen befindlichen Teilen der Scheibe die eigentliche Lichtzerhackung bewirken. Nachteilig ist indessen bei dieser innengelagerten Zerhackerscheibe, daß sie sich leicht verkanten kann und einer Temperaturdrift unterliegt. Während des Betriebs tritt ein sogenanntes Chopper-Springen auf, d. h. es liegen zwei metastabile Zustände der Kombination Chopperrad/Gehäuse vor. Diese Zustände ergeben sich aufgrund der notwendigen Lagerspiele, damit bei Temperaturänderungen das Gesamtsystem nur mit schwimmender Reibung arbeitet. Das Lagerspiel ist seinerseits bedingt durch die Verwendung unterschiedlicher Materialien mit unterschiedlichen Wärmeausdehnungskoeffizienten. Außerdem ermöglichen die Fertigungstoleranzen für die bekannte Geometrie kleine Lagerspiele.

Bei einem anderen bekannten elektromechanischen Licht-Chopper, der für vier verschiedene Wellenlängen verwendbar ist, ist die Antriebsachse einer rotierenden Filterscheibe in einem Gehäuse kugelgelagert untergebracht und gewährleistet auf diese Weise das Betreiben der Filterscheibe mit einigen 1000 U/min (DD-PS 216 323, Seite 2, letzter Absatz). Auch diese Zerhackerscheibe unterliegt einer Temperaturdrift.

Die Erfindung liegt deshalb die Aufgabe zugrunde, die Laufeigenschaften einer Zerhackerscheibe zu verbessern.

Diese Aufgabe wird dadurch gelöst, daß die Zerhackerscheibe mit dem einen Ende ihrer Achse mit einer Lagervorrichtung gekoppelt ist, die wenigstens zwei Auflagestellen aufweist, mit denen sie auf einem Teil aufliegt, in dem das zweite Ende der Achse gelagert ist.

Der mit der Erfindung erzielte Vorteil besteht insbesondere darin, daß sich die Zerhackerscheibe nicht mehr verkanten und das sogenannte Zerhackerrauschen minimiert wird. Das Nichtverkanten beruht im wesentlichen darauf, daß die Zerhackerscheibe eine Dreipunktlagerung aufweist. Durch diese Dreipunktlagerung werden Verschiebungen der Achse in horizontaler und in vertikaler Richtung vermieden. Die Dreipunktlagerung verringert auch das Lagerspiel, so daß die Temperaturdrift erheblich reduziert wird. Damit verbunden ist eine Abnahme des Zerhacker-Rauschens.

Ausführungsbeispiele der Erfindung sind in der Zeichnung dargestellt und werden im folgenden näher beschrieben. Es zeigen:

Fig. 1 eine perspektivische Darstellung der Vorderseite einer erfindungsgemäßen Zerhackereinrichtung;

Fig. 2 eine perspektivische Darstellung der Rückseite des hinteren Teils der erfindungsgemäßen zweiteiligen Zerhackereinrichtung;

Fig. 3 eine perspektivische Darstellung der Rückseite des in der Fig. 2 dargestellten Teils der Zerhackereinrichtung;

Fig. 4 eine direkte Draufsicht auf das in der Fig. 2 dargestellte Teil, und zwar um 180° gekippt;

Fig. 5 einen Schnitt V-V durch die in der Fig. 4 gezeigte Vorrichtung;

Fig. 6 eine direkte Draufsicht auf das in der Fig. 3 gezeigte Teil der Zerhackereinrichtung;

Fig. 7 einen Schnitt VII-VII durch die in der Fig. 6 gezeigte Vorrichtung;

Fig. 8 einen Schnitt VIII-VIII durch die in der Fig. 6 gezeigte Vorrichtung;

Fig. 9 einen Schnitt IX-IX durch die in der Fig. 6 gezeigte Vorrichtung;

Fig. 10 eine perspektivische Darstellung der Rückseite des in der Fig. 1 gezeigten vorderen Teils der Zerhackereinrichtung;

Fig. 11 eine Draufsicht auf die in der Fig. 10 dargestellte Halterung einer Zerhackerscheibe;

Fig. 12 eine Seitenansicht der in der Fig. 11 dargestellten Halterung;

Fig. 13 eine andere Seitenansicht der in der Fig. 11 dargestellten Halterung;

Fig. 14 eine direkte Draufsicht auf den vorderen Teil der in der Fig. 1 dargestellten Zerhackereinrichtung, wobei der Ferrarismotor weggelassen ist;

Fig. 15 eine Variante der Erfindung, bei welcher die Zerhackerscheibe mit ihrem Träger eine Einheit bildet;

Fig. 16 eine Draufsicht auf die Anordnung der Fig. 15;

Fig. 17 eine Seitenansicht der Anordnung gemäß Fig. 15;

Fig. 18 eine Draufsicht auf eine Variante der in der Fig. 14 dargestellten Vorrichtung.

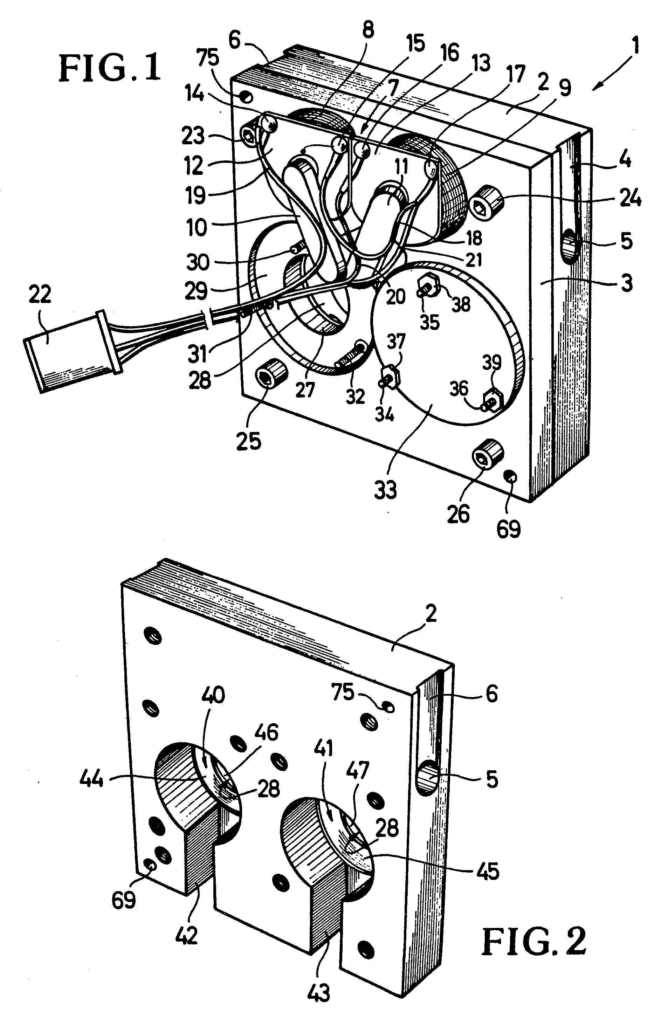

In der Fig. 1 ist eine perspektivische Ansicht der Vorderseite einer erfindungsgemäßen Zerhackereinrichtung 1 dargestellt. Diese Zerhackereinrichtung 1 besteht aus zwei miteinander verbindbaren Teilen 2, 3, wobei der vordere Teil 3 eine geringere Tiefe als der hintere Teil 2 aufweist.

Im hinteren Teil 2 erkennt man eine seitliche Nut 4, die in ihrem unteren Ende eine Durchbohrung 5 aufweist. Eine entsprechende Nut 6 auf der gegenüberliegenden Seite des hinteren Teils 2 ist ebenfalls erkennbar. Die Nuten 4, 6 dienen zur Befestigung der Zerhackereinrichtung 1 in einem nicht gezeigten Gehäuse. Hierzu wird ein nicht dargestellter Bolzen in die Durchbohrung 5 eingeführt.

Der vordere Teil 3 der Zerhackereinrichtung trägt einen Ferrarismotor 7, der zwei Wicklungen 8, 9 aufweist, welche Schenkel der Magnete 10, 11 umgeben. Vor den Wicklungen 8, 9 befinden sich durchsichtige Kunststoffscheiben 12, 13, an deren oberen Enden Anlötungen 14 - 17 vorgesehen sind. Mit diesen Anlötungen 14 - 17 sind elektrische Leitungen 18 - 21 verbunden, von denen drei Leitungen 19, 20, 21 auf einen gemeinsamen Koppler 22 geführt sind.

Der vordere und der hintere Teil 2, 3 sind mittels Imbus-Schrauben 23 -26 miteinander verbunden. Neben den Imbus-Schrauben 23 und 26 sind Bohrungen 69, 75 für die Aufnahme von Paßstiften vorgesehen.

Unterhalb der Wicklung 8 weist der vordere Teil 3 eine Durchbohrung 27 auf, hinter der eine Zerhackerscheibe 28 erkennbar ist. Die Durchbohrung 27 ist mit einer kreisringförmigen Ausfräsung 29 umgeben, in der drei Schrauben 30,31,32 eingelassen sind. Eine der Durchbohrung 27 entsprechende Durchbohrung unterhalb der Wicklung 9 ist mittels einer runden Kunststoffscheibe 33 abgedeckt, die mittels Schrauben 34,35,36 und Muttern 37,38,39 befestigt ist.

In der Fig. 2 ist die Rückseite des hinteren Teils 2 der Zerhackereinrichtung 1 dargestellt. Diese Rückseite weist zwei zylindrische Bohrungen 40, 41 auf, die jeweils eine Öffnung 42,43 besitzen, deren Tiefe der Tiefe der Bohrungen 40,41 entspricht. Im jeweiligen Boden 44,45 der Bohrungen 40,41 ist jeweils eine Durchbohrung 46,47 vorgesehen, hinter der die Zerhackerscheibe 28 vorbeiläuft.

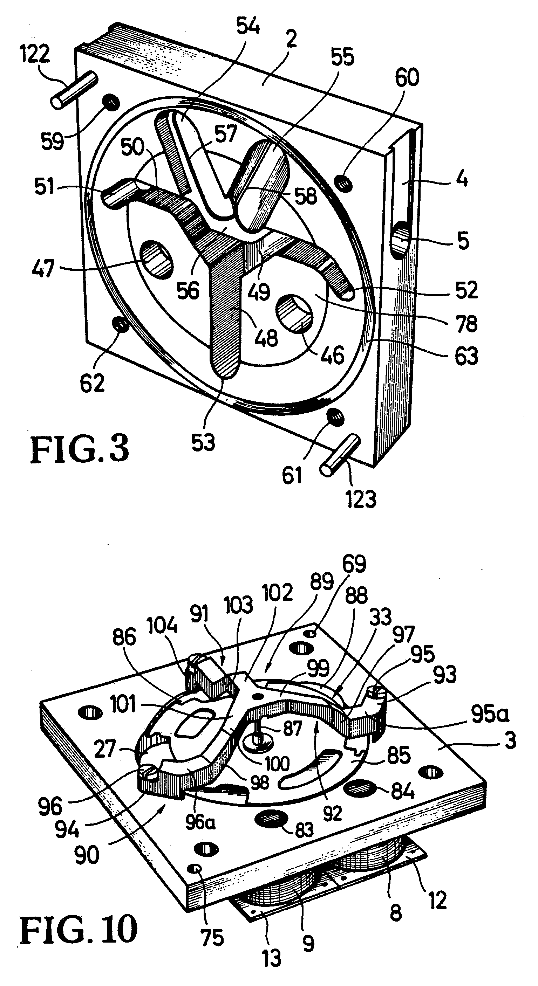

Die Fig. 3 zeigt die Rückansicht der in der Fig. 2 dargestellten Vorrichtung bzw. die Draufsicht auf den hinteren Teil 2, wenn man bei der Darstellung der Fig. 1 den vorderen Teil 3 wegnimmt. In dem hinteren Teil 2 sind mehrere Ausfräsungen bzw. Aussparungen von unterschiedlicher Tiefe vorgesehen. Die tiefsten Ausfräsungen befinden sich im zentralen Bereich und sind dort mit den Bezugszahlen 48, 49, 50 versehen. Die äußeren Enden 51, 52, 53 dieser Ausfräsungen 48, 49, 50 sind etwa um ein Viertel weniger tief. Wesentlich weniger tief sind die Ausfräsungen 54, 55, die sich an den Vorsprung 56 anschließen. Diese Ausfräsungen 54, 55 dienen zur Aufnahme von nicht dargestellten Teilen des Ferrarismotors 7, die etwa die Form der Joche der Magnete 10, 11 haben, welche in Fig. 1 dargestellt sind. Der Vorsprung 56 liegt nur geringfügig höher als der Zentralbereich der Ausfräsungen 54, 55 und entspricht somit bezüglich seiner Tiefe dem Randbereich 57, 58 der Ausfräsungen 54, 55. Mit 59, 60, 61, 62 sind Bohrungen bezeichnet, durch die Verbindungsschrauben gesteckt werden können. Alle inneren Aussparungen sind von einer ringförmigen Nut 63 umgeben, die nur eine geringe Tiefe besitzt. Mit 122, 123 sind fest eingepreßte Paßstifte bezeichnet.

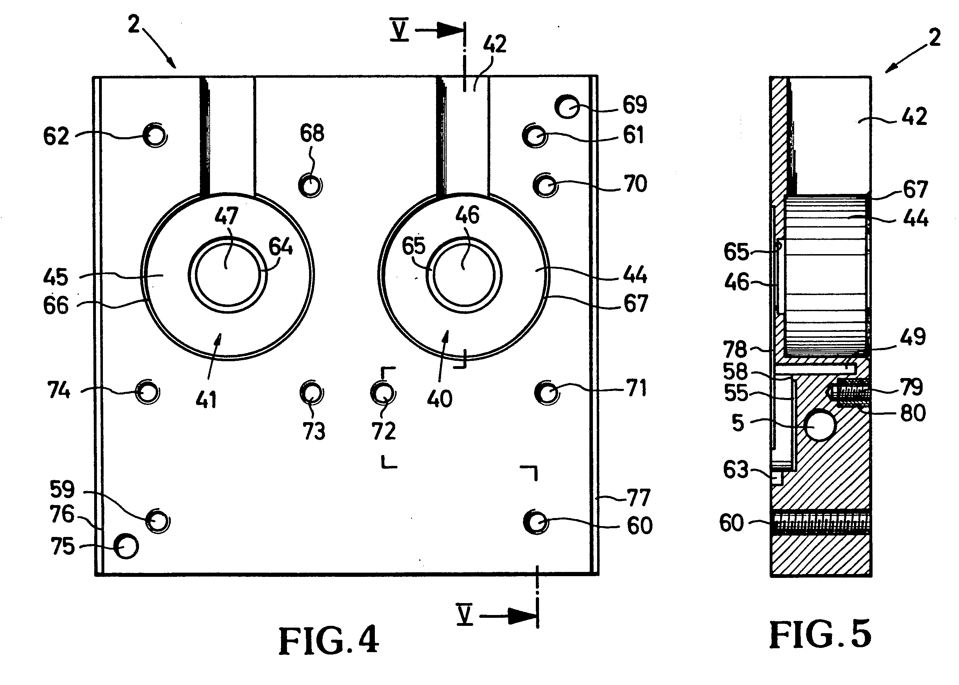

In der Fig. 4 ist die in der Fig. 2 gezeigte Vorrichtung noch einmal in der Draufsicht dargestellt, jedoch um 180° gedreht.

Man erkennt bei dieser Darstellung, daß die Durchbohrungen 46, 47 von einem kreisringförmigen Rand 64, 65 umgeben sind, der geringfügig tiefer als der jeweilige Boden 44, 45 liegt. Die oberen Kanten der Bohrungen 40, 41 sind abgeschrägt, was durch die Kreisringe 66, 67 dargestellt ist. In dem Teil 2 sind mehrere Bohrungen 68 - 75, 59 - 62 vorgesehen, von denen jedoch nur die Bohrungen 59 - 62 vollständig durch das Teil 2 gehen. Die beiden seitlichen Kanten des Teils 2 weisen Abschrägungen 76, 77 auf.

Die Fig. 5 zeigt einen Schnitt V-V durch das Teil 2 in Fig. 4. Man erkennt bei dieser Darstellung die bereits in der Fig. 3 gezeigte Vertiefung 78 sowie andere Nuten und Vertiefungen 55, 58, 63, die in der Fig. 3 dargestellt sind. Außerdem ist eine Öffnung 79 gezeigt, in der sich eine Spule 80 befindet.

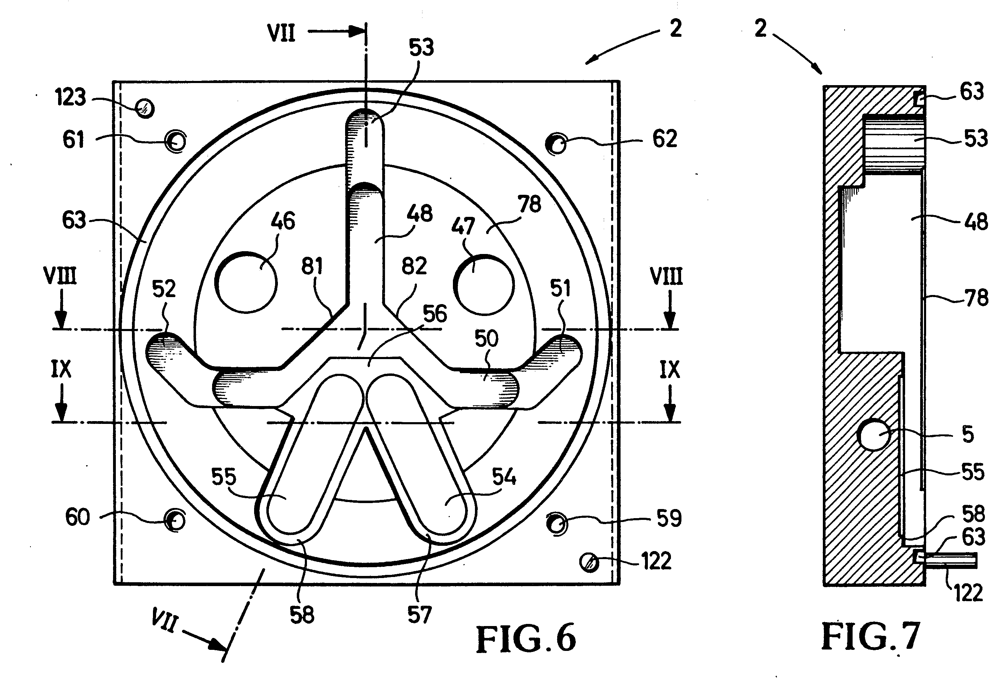

In der Fig. 6 ist eine Draufsicht auf den in der Fig. 3 dargestellten Teil 2 gezeigt, und zwar um 180° gedreht. Man erkennt hierbei zwei schräge Flächen 81, 82, welche zwischen den Ausfräsungen 48 und 52 bzw. 48 und 50 liegen. Die Nut 53 dient zur Aufnahme eines Teils eines Lagerbocks. Ein Schnitt VII-VII durch den Teil 2 (Fig. 6) ist in der Fig. 7 dargestellt.

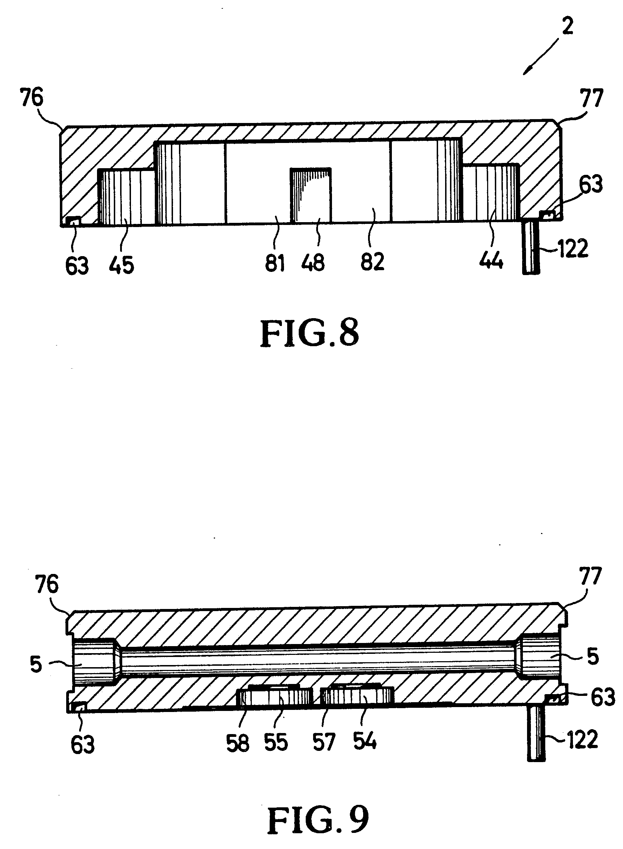

Die Fig. 8 zeigt einen Schnitt VIII-VIII durch den Teil 2, während die Fig. 9 einen Schnitt IX-IX durch diesen Teil 2 zeigt. Ein eingepreßter Paßstift ist hierbei mit 122 bezeichnet.

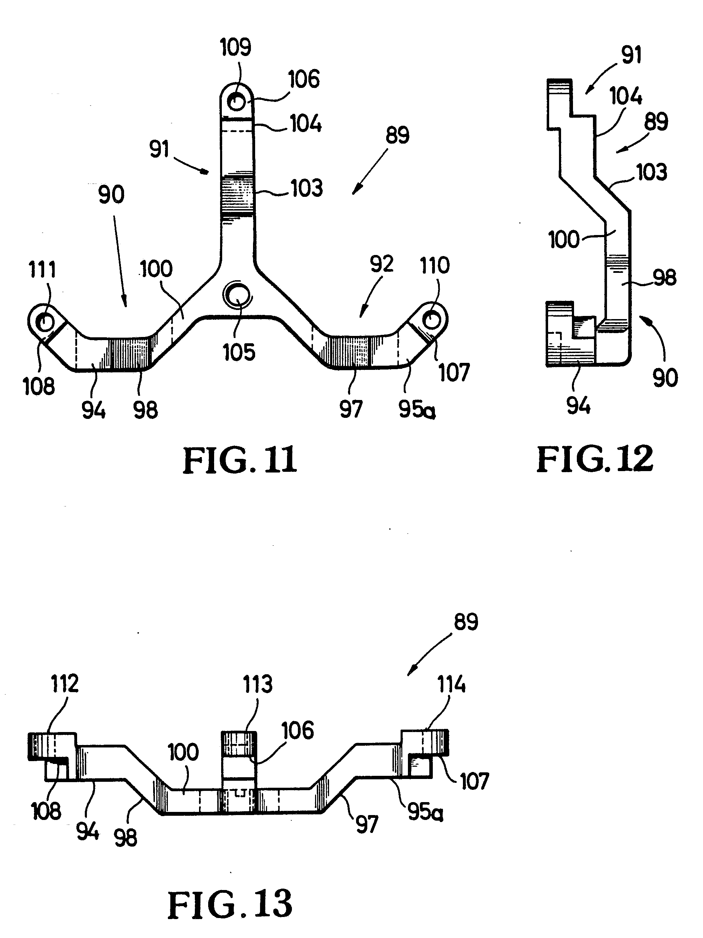

In der Fig. 10 ist die Rückseite des vorderen Teils 3 (Fig. 1) dargestellt. Man erkennt hierbei die Enden 83,84 der Schenkel, die von den Wicklungen 8,9 des Ferrarismotors umgeben sind. Die Zerhackerscheibe 85 ist dicht oberhalb einer Aussparung 86 mittels einer Welle 87 drehbar gelagert. Die in der Fig. 1 erkennbare Aussparung 27 ist auch in der Fig. 10 zu sehen. Hinter einer weiteren Aussparung 88 erkennt man die Kunststoffscheibe 33. Das Gegenlager für die Welle 87 befindet sich in einer Vorrichtung 89, die drei Beine 90,91,92 aufweist. Jeder dieser Beine 90-92 ist in mehrere Teilabschnitte untergliedert. Die Beine 90,92 sind mit nach vorn abgewinkelten Enden 93,94 und mittels Schrauben 95,96 mit dem Teil 3 verschraubt. Auf gleicher Höhe mit diesen Enden 93,94 liegen die hieran anschließenden Schenkel 95a, 96a, die sodann in die aufsteigenden Schenkel 97,98 übergehen. Diese aufsteigenden Schenkel münden ihrerseits in die Schenkel 99,100, die durch ein Verbindungsstück 101 miteinander verbunden sind. Der dritte Arm 91 ist ähnlich aufgebaut wie die beiden anderen Arme 90,92; seine einzelnen Schenkel 102,103,104 sind jedoch in der Horizontalen nicht zueinander abgewinkelt. Die Schenkel 95a und 99 bzw. 96a und 100 bilden dagegen in der Horizontalen einen Winkel von etwa 45 Grad.

In der Figur 11 ist die Vorrichtung 89 noch einmal in der Draufsicht dargestellt. Mit 105 ist hierbei eine Bohrung bezeichnet, durch welche die Welle 87 (Fig. 10) geführt ist. Für die Anordnung von Schrauben sind Ansätze 106,107,108 mit Bohrungen 109,110,111 vorgesehen.

Die Fig. 12 zeigt eine Seitenansicht der in der Fig. 11 dargestellten Vorrichtung 1. Bei dieser Darstellung sind nur die Schenkel 90 und 91 erkennbar.

In der Fig. 13 ist eine Seitenansicht der Vorrichtung 89 gezeigt, wobei diese Vorrichtung im Vergleich zur Darstellung der Fig. 11 um 90° gekippt ist.

Die Auflageflächen der Vorrichtung 89 für die Verbindung mit dem Teil 3 sind folglich nach oben gerichtet und mit den Bezugszahlen 112,113,114 versehen.

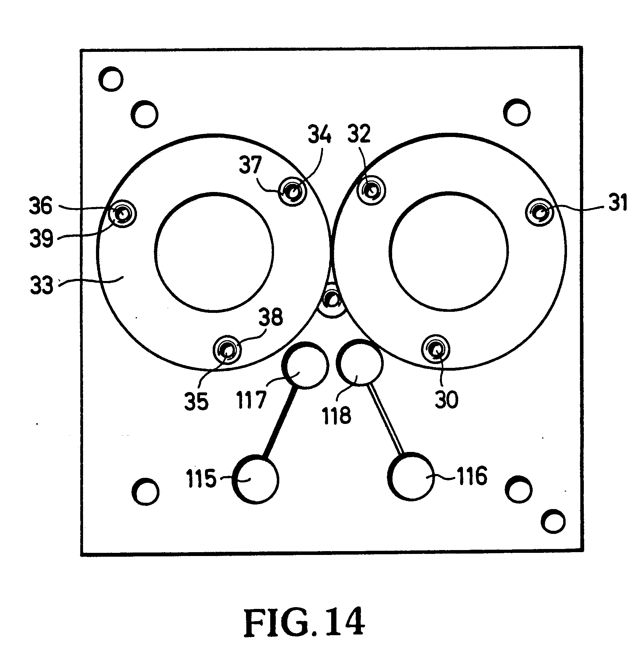

Die Fig. 14 zeigt eine Draufsicht auf den Teil 3, wobei der Ferrarismotor weggenommen ist. Dort, wo die von elektrischen Wicklungen umgebenen Schenkel des Ferrarismotors durch den Teil 3 geschoben sind, sind Bohrungen 115,116 vorgesehen. Die Schenkel des Ferrarismotors, die nicht mit Wicklungen umgeben sind, werden durch Bohrungen 117,118 geschoben.

Einzelheiten über die Wirkungsweise des Ferrarismotors 7 können der DE-PS 26 08 669 entnommen werden.

Der Zusammenbau der Teile 2,3 zu der in der Fig. 1 gezeigten Einrichtung 1 geschieht in der Weise, daß die Vorrichtung 89 des Teils 3 in die entsprechenden Aussparungen 48-55 des Teils 2 eingebracht wird. Sodann werden beide Teile miteinander verschraubt. Die von dem Ferrarismotor 7 angetriebene Zerhackerscheibe 85 kann sich nun in dem Zwischenraum drehen, der durch die Vertiefung 78 im Teil 2 und durch die Vertiefung 86 im Teil 3 gebildet wird. In die Bohrungen 40,41 werden in den Figuren Küvetten eingefügt, die beispielsweise mit einem zu analysierenden Gas gefüllt sind. Diese Küvetten bzw. das in ihnen enthaltene Gas können sodann durch die Öffnungen 46,47 hindurch mit dem Licht von Lichtquellen bestrahlt werden, die ebenfalls nicht dargestellt sind und die sich vor den Durchbohrungen 27,88 auf der Seite der Wicklungen 8,9 des Ferrarismotors 7 befinden.

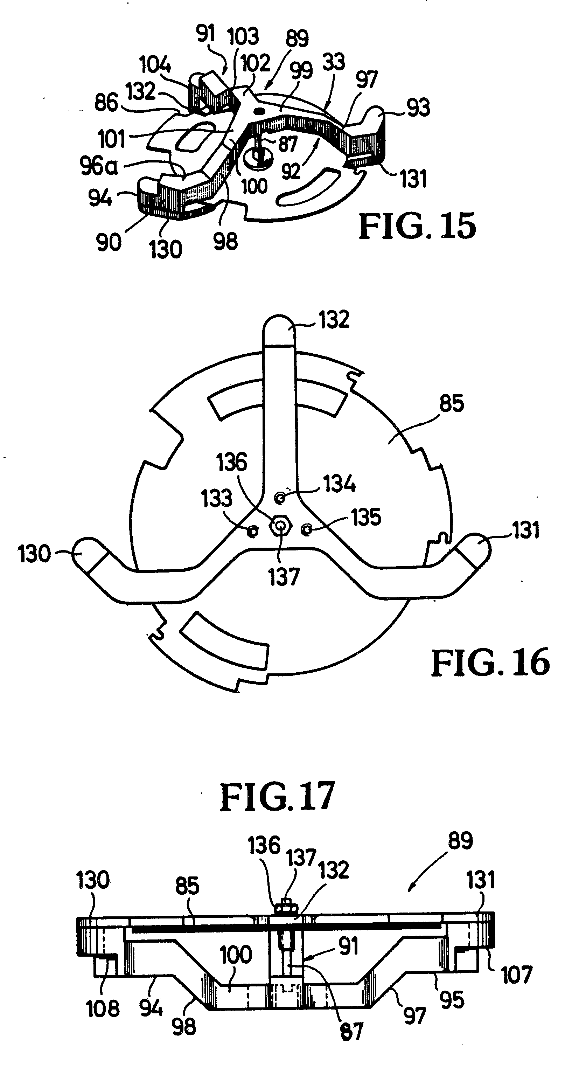

In der Fig. 15 ist eine Variante der Erfindung dargestellt, bei der die Zerhackerscheibe 85 mit der Vorrichtung 89 eine Einheit bildet. Hierdurch ist es möglich, diese Einheit aus den Teilen 2, 3 herauszunehmen. Die Vorrichtung 89 braucht bei dieser Lösung nicht mehr an den Enden ihrer Arme 90, 91, 92 mit einem Teil 2, 3 verschraubt zu werden. Dieser Vorteil wird durch ein Bauteil erreicht, das die Form einer vertikalen Projektion der Vorrichtung 89 besitzt und von dem man in der Fig. 15 die Enden 130, 131, 132 erkennt. Die Zerhackerscheibe 85 ist somit zwischen dem erwähnten Bauteil und der Vorrichtung 89 angeordnet, wobei die Welle 87, um die sie sich dreht, sowohl in dem Bauteil als auch in der Vorrichtung 89 gelagert ist.

Die Fig. 16 zeigt eine Ansicht von unten auf die Anordnung der Fig. 15, d. h. das Bauteil, das in der Fig. 15 mit seinen Enden 130, 131, 132 unterhalb der Vorrichtung 89 angeordnet war, liegt nun über dieser Vorrichtung 89. Mit 137 ist eine Schraube bezeichnet, die von einer Mutter 136 umgeben ist. Beide, Schraube 137 und Mutter 136, dienen dazu, das Lager an dem Bauteil zu befestigen, in dem die Welle 87 rotiert.

Im Zentrum des Bauteils sind Gewindebohrungen 133, 134, 135 vorgesehen, in die Schrauben einführbar sind, mit denen dieses Bauteil an dem Teil 3 befestigt werden kann.

In der Fig. 17 ist eine Seitenansicht der Einheit aus Zerhackerscheibe 85, Bauteil und Vorrichtung 89 dargestellt. Man sieht hierbei deutlich, daß die Zerhackerscheibe 85 dicht unterhalb des Bauteils angeordnet ist.

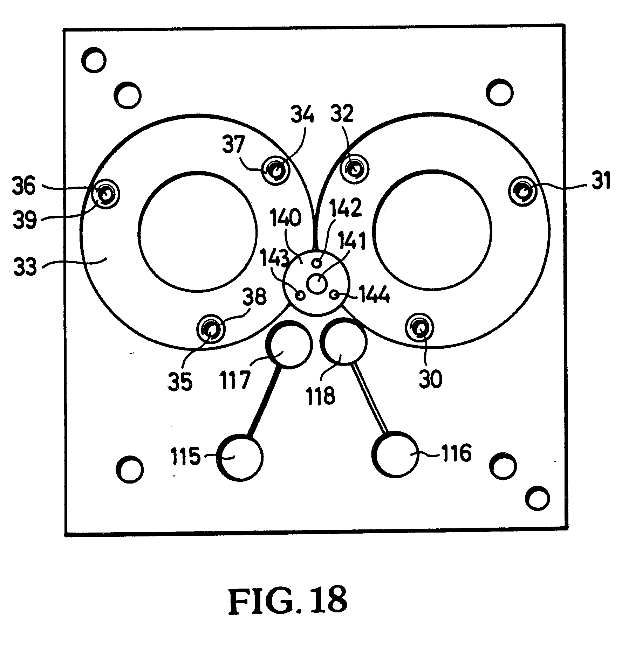

Die Fig. 18 zeigt eine Variante der Vorrichtung gemäß Fig. 14, die für die Aufnahme der Einheit aus Zerhackerscheibe 85, Bauteil und Vorrichtung 89 geeignet ist. Diese Vorrichtung weist vier Bohrungen auf, von denen eine mittlere Bohrung 141 dazu dient, die Schraube 137 und die Mutter 136 aufzunehmen bzw. zu umfassen. Diese mittlere Bohrung 141 ist von drei weiteren Bohrungen 142, 143, 144 umgeben, durch die nicht dargestellte Schrauben gesteckt und in die Gewindebohrungen 133 -135 des Bauteils eingeschraubt werden können. 140 ist eine Ausnehmung.

Auf der nicht dargestellten Rückseite der in der Fig. 18 gezeigten Anordnung sind Vertiefungen vorgesehen, welche die Form des Bauteils haben, wie sie aus der Fig. 16 ersichtlich ist. Hierdurch ist die Einheit aus Zerhackerscheibe 85, Bauteil und Vorrichtung 89 sicher zwischen den Teilen 2, 3 gelagert.

Mit der in den Figuren 15 - 17 gezeigten Variante ist es möglich, die Wärmeausdehnungsprobleme zu beherrschen, die bei der zuvor beschriebenen Ausführungsform auftreten können. Durch die zentralisierte Dreipunktlagerung der zweiten Variante werden Verschiebungen der Welle 87 in horizontaler und in vertikaler Richtung vermieden, wodurch sich verbesserte Laufeigenschaften ergeben.

## Ansprüche

1. Strahlungs-Zerhackereinrichtung mit einer Zerhackerscheibe, **dadurch gekennzeichnet,** daß die Zerhackerscheibe (85) mit dem einen Ende ihrer Achse (87) mit einer Lagervorrichtung (89) gekoppelt ist, die wenigstens zwei Auflagestellen (93, 94) aufweist, mit denen sie auf einem Teil (130, 2, 3) aufliegt, in dem das zweite Ende der Achse (87) gelagert ist.

2. Strahlungs-Zerhackereinrichtung nach Anspruch 1, **dadurch gekennzeichnet,** daß die Lagervorrichtung (89) drei Auflagestellen (93, 94, 104) aufweist, die im wesentlichen einen Winkel von 120 Grad zueinander bilden.

3. Strahlungs-Zerhackereinrichtung nach Anspruch 1, **dadurch gekennzeichnet,** daß die Lagervorrichtung (89) mit einem Bauteil (130, 131, 132) eine Einheit bildet und sich die Zerhackerscheibe (85) zwischen Lagervorrichtung (89) und Bauteil (130, 131, 132) bewegt.

4. Strahlungs-Zerhackereinrichtung nach Anspruch 1, **dadurch gekennzeichnet,** daß die Lagervorrichtung (89) direkt mit einem Teil (3) verbunden ist, der auf einem anderen Teil (2) aufliegt.

5. Strahlungs-Zerhackereinrichtung nach Anspruch 1, **dadurch gekennzeichnet,** daß die Zerhackerscheibe (85) zwischen zwei aufeinanderliegenden Teilen (2, 3) angeordnet ist.

6. Strahlungs-Zerhackereinrichtung nach Anspruch 5, **dadurch gekennzeichnet,** daß der eine Teil (3) eine Lagervorrichtung (89) aufweist, während der andere Teil (2) eine Aussparung (48 - 55) besitzt, in welche die Lagervorrichtung (89) einführbar ist.

7. Strahlungs-Zerhackereinrichtung nach Anspruch 5, **dadurch gekennzeichnet,** daß die Oberfläche der beiden Teile (2, 3) wenigstens teilweise ebene Bereiche aufweist und daß diese ebenen Bereiche ohne Zwischenräume aufeinander liegen.

8. Strahlungs-Zerhackereinrichtung nach Anspruch 5, **dadurch gekennzeichnet,** daß die beiden Teile (2, 3) als Scheiben mit Oberflächen ohne Erhebungen ausgebildet sind, wobei jede Scheibe eine bestimmte Dicke hat.

9. Strahlungs-Zerhackereinrichtung nach Anspruch 8, **dadurch gekennzeichnet,** daß die aufeinanderliegenden Teile (2, 3) eine Scheibe bilden, deren Dicke gleich der Summe der Dicken der beiden Teile (2, 3) ist.

10. Strahlungs-Zerhackereinrichtung nach Anspruch 8, **dadurch gekennzeichnet,** daß die Scheiben quaderförmig ausgebildet sind.

11. Strahlungs-Zerhackereinrichtung nach Anspruch 10, **dadurch gekennzeichnet,** daß die Scheiben quadratisch ausgebildet sind.

12. Strahlungs-Zerhackereinrichtung nach Anspruch 5, **dadurch gekennzeichnet,** daß der eine Teil (3) auf seiner dem anderen Teil (2) gegenüberliegenden Seite eine Aussparung (86) aufweist, deren Tiefe im wesentlichen der Dicke der Zerhackerscheibe (85) entspricht, und daß in diesem Teil (3) ein Lager für das eine Ende einer die Zerhackerscheibe (85) tragenden Welle (87) vorgesehen ist.

13. Strahlungs-Zerhackereinrichtung nach Anspruch 1, **dadurch gekennzeichnet, daß** die Lagervorrichtung (89) ein Lager (105) aufweist, in dem das andere Ende der die Zerhackerscheibe (85) tragenden Welle (87) ruht.

14. Strahlungs-Zerhackereinrichtung nach Anspruch 1, **dadurch gekennzeichnet, daß** die Lagervorrichtung (89) an ihrem äußeren Umfang (93, 94, 104) und ihrem zentralen Bereich (100) einen Abstand aufweist, der im wesentlichen von der Länge der die Zerhackerscheibe (85) tragenden Welle (87) abhängt.

15. Strahlungs-Zerhackereinrichtung nach Anspruch 14, **dadurch gekennzeichnet, daß** die Lagervorrichtung (89) mehrere Beine (90, 91, 92) aufweist, die mit ihrem einen Ende (93, 94, 104) mit dem einen Teil (3) verbunden und mit ihrem anderen Ende zusammengeführt sind.

16. Strahlungs-Zerhackereinrichtung nach Anspruch 15, **dadurch gekennzeichnet, daß** die Lagervorrichtung (89) drei Beine (90, 91, 92) aufweist, von denen ein Bein (91) auf einer Gerade liegt, während die beiden anderen Beine (90, 92) spiegelbildlich zu dieser Geraden angeordnet sind.

17. Strahlungs-Zerhackereinrichtung nach Anspruch 16, **dadurch gekennzeichnet, daß** die beiden spiegelbildlich angeordneten Beine (90, 92) jeweils einen zum dritten Bein (91) horizontal senkrecht verlaufenden Schenkel (97, 98) und zwei zu diesem Schenkel (97, 98) jeweils abgewinkelten Schenkel (z. B. 100) aufweisen.

18. Strahlungs-Zerhackereinrichtung nach Anspruch 17, **dadurch gekennzeichnet, daß** die abgewinkelten Schenkel (94, 95a) relativ zu dem Schenkel (100) auf verschiedenen Ebenen liegen und durch den horizontal senkrecht verlaufenden Schenkel (97, 98) miteinander verbunden sind.

19. Strahlungs-Zerhackereinrichtung nach Anspruch 16, **dadurch gekennzeichnet, daß** das eine Bein (91) zwei auf verschiedenen Ebenen liegende Schenkel aufweist, die durch einen dritten Schenkel miteinander verbunden sind, wobei alle Schenkel auf einer gemeinsamen Geraden liegen.

20. Strahlungs-Zerhackereinrichtung nach Anspruch 5, **dadurch gekennzeichnet, daß** der eine Teil (3) einen Antriebsmotor (7) für die Zerhackerscheibe (85) trägt.

21. Strahlungs-Zerhackereinrichtung nach Anspruch 20, **dadurch gekennzeichnet, daß** der Antriebsmotor (7) ein Ferrarismotor ist.

22. Strahlungs-Zerhackereinrichtung nach Anspruch 21, **dadurch gekennzeichnet, daß** zwei U-förmige, den magnetischen Fluß leitende Elemente (10, 11) vorgesehen sind, wobei die Seitenschenkel des U in dem Teil (3) enden.

23. Strahlungs-Zerhackereinrichtung nach Anspruch 22, **dadurch gekenn zeichnet, daß** jeweils einer der Seitenschenkel mit einer elektrischen Wicklung (8, 9) umgeben ist.

24. Strahlungs-Zerhackereinrichtung nach Anspruch 22, **dadurch gekennzeichnet, daß** jeweils ein Seitenschenkel der U-förmigen Elemente (10, 11) mit seinem Umfang an den äußeren Umfang der Zerhackerscheibe (85) grenzt, während der jeweils andere Seitenschenkel über der Zerhackerscheibe (85) endet.

25. Strahlungs-Zerhackereinrichtung nach Anspruch 5, **dadurch gekennzeichnet, daß** in dem einen Teil (3) zwei Öffnungen (46, 47) für den Durchtritt von Strahlung vorgesehen sind.

26. Strahlungs-Zerhackereinrichtung nach Anspruch 6, **dadurch gekennzeichnet, daß** die Aussparungen (48 - 55) in dem einen Teil (2) der Form der Lagervorrichtung (89) angepaßt sind.

27. Strahlungs-Zerhackereinrichtung nach Anspruch 5, **dadurch gekennzeichnet, daß** der eine Teil (2) auf seiner einen Seite Aussparungen (40, 41) für die Aufnahme von Küvetten aufweist, wobei diese Aussparungen (40, 41) an Stellen vorgesehen sind, die sich nicht mit den Aussparungen (48 - 55) für die Aufnahme der Lagervorrichtung (89) auf der anderen Seite dieses Teils (2) überlappen.

28. Strahlungs-Zerhackereinrichtung nach Anspruch 3, **dadurch gekennzeichnet, daß** Zerhackerscheibe (85), Bauteil und Vorrichtung (89) eine Einheit bilden, die in Aussparungen der Teile (2, 3) ruht, und daß das Bauteil in seinem zentralen Bereich Gewindebohrungen (133, 134, 135) aufweist, die zum Verschrauben des Bauteils mit einem Teil (3) dienen.

29. Strahlungs-Zerhackereinrichtung nach Anspruch 1, **dadurch gekennzeichnet, daß** die Lagervorrichtung (89) an ihren Enden Bohrungen aufweist, durch die jeweils eine Buchse mit Innengewinde geführt ist.

30. Strahlungs-Zerhackereinrichtung nach Anspruch 1, **dadurch gekennzeichnet, daß** die Einzelteile der Zerhackereinrichtung thermisch angepaßt und vorzugsweise aus demselben Material bestehen.

31. Strahlungs-Zerhackereinrichtung nach Anspruch 30, **dadurch gekennzeichnet, daß** die Vorrichtung (89) aus demselben Material besteht wie die Bodenplatte (3), und zwar vorzugsweise aus einem gut wärmeleitenden Material, z. B. Aluminium.

32. Strahlungs-Zerhackereinrichtung nach Anspruch 31, **dadurch gekennzeichnet, daß** auch die Welle (87) in der Hauptsache aus Aluminium besteht und Lagerstifte in sie eingepaßt sind.

EP 0 301 251 A2

**FIG.1**

**FIG.2**

FIG.3

FIG.10

**FIG.4**

**FIG.5**

EP 0 301 251 A2

FIG.7

FIG.6

76    77
2

63

63  45    81 48 82    44  122

**FIG.8**

76    77
5    5
63
63    58 55 57 54    122

**FIG.9**

**FIG. 11**

**FIG.12**

**FIG.13**

FIG.14

FIG. 15

FIG. 16

FIG.17

**FIG. 18**